# EUROPÄISCHE PATENTSCHRIFT

(11) **EP 3 850 198 B1**
(45) Veröffentlichungstag und Bekanntmachung des Hinweises auf die Patenterteilung: **29.06.2022**
(21) Anmeldenummer: 19739855.5
(22) Anmeldetag: 27.06.2019
(51) Int. Cl.: F01N 3/22, F01N 3/30, F16K 31/126, F16K 31/165, G05D 16/06

(54) **VENTILVORRICHTUNG**
VALVE DEVICE
DISPOSITIF DE VANNE

(30) Priorität: 10.09.2018 AT 5015218 U
(43) Veröffentlichungstag der Anmeldung: 21.07.2021
(73) Patentinhaber: MSG Mechatronic Systems GmbH, 8551 Wies (AT)
(72) Erfinder: LAMPL, Ewald, 8551 Wies (AT); THEUSSL, Daniel, 8530 Deutschlandsberg (AT)
(74) Vertreter: Wirnsberger & Lerchbaum Patentanwälte OG
(86) Internationale Anmeldenummer: PCT/AT2019/060213
(87) Internationale Veröffentlichungsnummer: WO 2020/051603

(56) Entgegenhaltungen:
- EP-A2- 1 046 797
- EP-A2- 2 014 887
- DE-A1- 10 148 384
- DE-A1-102007 048 365
- DE-B- 1 003 157
- DE-C- 960 082
- US-A- 3 983 697
- US-A- 4 684 103

## Beschreibung

Die Erfindung betrifft eine Ventilvorrichtung, insbesondere ein Sekundärluftventil für einen Abgasstrang einer Verbrennungskraftmaschine, aufweisend ein Ventilgehäuse mit einem Einlass und einem Auslass, einem zwischen dem Einlass und dem Auslass angeordneten, eine Ventilöffnung aufweisenden Ventilsitz, welche Ventilöffnung durch ein mittels einer vorbestimmten Kraft gegen den Ventilsitz gedrücktes Ventilschließglied verschließbar ist, sowie eine auf das Ventilschließglied wirkende Membran, wobei durch die Membran ein erster Steuerraum von einem zweiten Steuerraum getrennt ist, sodass die Ventilvorrichtung mittels eines Druckunterschiedes zwischen dem ersten Steuerraum und dem zweiten Steuerraum schaltbar ist.

Ventilvorrichtungen der eingangs erwähnten Art sind aus dem Stand der Technik bekannt, insbesondere aus den Dokumenten DE 960 082 C und DE 101 48 384 A1. Als nachteilig hat sich bei einer solchen üblicherweise als Sekundärluftventil in einem Abgastrakt eines Kraftfahrzeuges eingesetzten Ventilvorrichtung erwiesen, dass das Ventilschließglied insbesondere aufgrund von im Abgas befindlichen Verunreinigungen, die sich am Ventilsitz ablagern, am Ventilsitz anhaftet, sodass ein zuverlässiges Öffnen der Ventilvorrichtung nicht gewährleistet werden kann, ohne eine Fläche der Membran derart zu vergrößern, dass über einen auf die größere Fläche der Membran wirkenden Druckunterschied eine entsprechend größere Kraft erreicht wird. Dies hat jedoch wiederum den Nachteil, dass ein Bauraum der Ventilvorrichtung in ungünstiger Weise vergrößert wird.

Hier setzt die Erfindung an. Aufgabe der Erfindung ist es, eine Ventilvorrichtung der eingangs genannten Art anzugeben, welche ein zuverlässiges Öffnen auch bei Einsatz in einem Abgasstrang eines Kraftfahrzeuges gewährleistet und gleichzeitig einen kleinen Bauraum aufweist.

Vorteilhaft ist eine Ventilanordnung, bei welcher die Membran mit dem Ventilschließglied zumindest über einen Teilbereich eines möglichen Hubes des Ventilschließgliedes über ein Getriebe verbunden ist, welches derart ausgebildet ist, dass eine Bewegung der Membran in eine Bewegung des Ventilschließgliedes mit geringerer Geschwindigkeit übersetzt wird.

Es ist bekannt, dass durch den Einsatz eines Getriebes bzw. eines Mechanismus, mit welchem Bewegungsgrößen geändert werden, zwischen der Membran und dem Ventilschließglied, welches Getriebe eine Übersetzung von einer Bewegung der Membran zu einer Bewegung des Ventilschließgliedes von weniger als 1:1 aufweist, sodass die Geschwindigkeit des Ventilschließgliedes geringer als die Geschwindigkeit der Membran ist, eine entsprechende Kraftübersetzung von mehr als 1:1 erreicht wird, sodass eine Kraft, mit welcher das Ventilschließglied bewegt wird, größer als eine Kraft ist, mit welcher die Membran aufgrund des auf die Membranoberfläche wirkenden Druckunterschiedes zwischen erstem Steuerraum und zweitem Steuerraum auf das Getriebe wirkt.

Dadurch kann auch mit kleiner Membranoberfläche eine große Kraft zum Öffnen der Ventilvorrichtung bereitgestellt werden, sodass diese auch bei einem am Ventilsitz anhaftenden bzw. klebenden Ventilschließglied öffenbar ist, um eine fluidische Verbindung zwischen Einlass und Auslass herzustellen. Eine Bewegung des Ventilschließgliedes erfolgt somit langsamer als eine Bewegung der Membran.

Die Membran ist üblicherweise etwa kreisrund ausgebildet und an einem Rand fest bzw. starr mit dem Ventilgehäuse verbunden, in der Regel durch einen die Membran an einem Umfang gegen ein Gegenlager drückenden Membranklemmdeckel, sodass bei einem Druckunterschied ein mittiger Bereich der Membran eine maximale Bewegung ausführt. In der Regel ist dieser mittige Bereich der Membran über das Getriebe mit dem Ventilschließglied gekoppelt, weswegen hier als Geschwindigkeit bzw. Bewegung der Membran eine Geschwindigkeit bzw. Bewegung dieses mittigen Bereiches bzw. eines Bereiches der Membran, welcher bei Druckbeaufschlagung eine maximale Auslenkung aufweist, verstanden wird.

Günstig ist es, wenn ein Übersetzungsverhältnis des Getriebes über den Hub des Ventilschließgliedes nicht konstant ist. Als Hub des Ventilschließgliedes wird ein Weg verstanden, welchen das Ventilschließglied zwischen einer geschlossenen Position, in welcher das Ventilschließglied auf dem Ventilsitz dichtend aufliegt, und einer offenen Position, in welcher eine weitere Bewegung des Ventilschließgliedes vom Ventilsitz weg beispielsweise aufgrund eines Anschlages nicht möglich ist, zurücklegt. Üblicherweise verläuft eine Öffnungsbewegung des Ventilschließgliedes entlang einer Geraden in einer Öffnungsrichtung.

Es kann dann das Übersetzungsverhältnis des Getriebes, welches ein Verhältnis von einem Weg oder einer Geschwindigkeit der Membran, welche eingangsseitig mit dem Getriebe verbunden ist, zu einem Weg bzw. einer Geschwindigkeit des Ventilschließgliedes, welches ausgangsseitig mit dem Getriebe verbunden ist, gezielt an eine gegebenenfalls über den Hub des Ventilschließgliedes veränderliche, erforderliche Kraft zum Öffnen des Ventilschließgliedes bzw. zum Halten eines gewünschten Öffnungszustandes angepasst werden.

Eine Kraft zum Öffnen des Ventilschließgliedes ist über den Hub insbesondere abhängig von Verunreinigungen zwischen dem Ventilschließglied und dem Ventilsitz sowie strömungsmechanischen Effekten beim Ausströmen von einem Fluid durch die Ventilöffnung.

Darüber hinaus kann die Kraft zum Bewegen des Ventilschließgliedes auch abhängig von einer Einrichtung sein, mit welcher das Ventilschließglied auf den Ventilsitz gedrückt wird, wenn kein Druckunterschied zwischen erstem Steuerraum und zweitem Steuerraum vorherrscht. In der Regel ist eine Kraft zum Öffnen des Ventilschließgliedes zu Beginn des Hubes, also bei geschlossener Ventilvorrichtung, wenn das Ventilschließglied auf dem Ventilsitz dichtend aufliegt, maximal.

Üblicherweise wird das Ventilschließglied mit einer Feder, insbesondere einer Schraubenfeder, gegen den Ventilsitz vorgespannt, sodass mit dem Druckunterschied zwischen erstem Steuerraum und zweitem Steuerraum auch die Vorspannkraft dieser Feder überwunden werden muss, um die Ventilvorrichtung zu öffnen. Über einen Hub des Ventilschließgliedes kann somit auch die der Öffnungsbewegung entgegenwirkende Kraft der Feder ansteigen. Auch dies kann bei einer Wahl eines von einem Hub abhängigen Übersetzungsverhältnisses berücksichtigt werden.

Alternativ zu einer Schraubenfeder kann das Ventilschließglied natürlich auch mit verschiedensten anderen Einrichtungen in der geschlossenen Position der Ventilvorrichtung auf den Ventilsitz gedrückt werden, um die Ventilvorrichtung dicht zu verschließen, beispielsweise mit einer eine Magnetkraft nutzenden Einrichtung.

Um gleichzeitig ein zuverlässiges Öffnen des Ventilschließgliedes aus der geschlossenen Position, in welcher das Ventilschließglied am Ventilsitz dichtend anliegt, sowie ein rasches Öffnen bis zu einem maximalen Hub zu gewährleisten, ist es vorteilhaft, wenn das Übersetzungsverhältnis bei geschlossener Ventilvorrichtung kleiner als 1:1 und an einem maximalen Hub größer als bei geschlossener Ventilvorrichtung ist. Ein Verhältnis der von der Membran an das Getriebe übertragenen zu der vom Getriebe an die Ventilvorrichtung übertragenen Kraft ist entsprechend invers zum Übersetzungsverhältnis des Getriebes in Bezug auf Wege und Geschwindigkeiten von Membran zu Ventilschließglied, weswegen mit einem Übersetzungsverhältnis bei geschlossener Ventilvorrichtung von weniger als 1:1 und einem größeren Übersetzungsverhältnis bei maximalen Hub eine große Kraft zum Lösen des Ventilschließgliedes vom Ventilsitz zu Beginn des Hubes und eine hohe Geschwindigkeit in einem Endbereich des Hubes bei gleichbleibenden Druckverhältnissen in den Steuerräumen erreicht werden. Eine auf das Ventilschließglied bei Beginn des Hubes wirkende Kraft ist somit größer als die von der Membran an das Getriebe abgegebene Kraft.

Eine über den Hub des Ventilschließgliedes veränderliche Übersetzung kann auf besonders einfache Weise konstruktiv erreicht werden, wenn die Membran ab einem vordefinierten Hub starr mit dem Ventilschließglied verbunden ist. Eine Verbindung der Membran mit dem Getriebe bzw. dem Ventilschließglied erfolgt üblicherweise über einen Punkt der Membran, welcher bei Druckbeaufschlagung eine maximale Auslenkung aufweist, in der Regel über einen Mittelpunkt der Membran. Beispielsweise kann vorgesehen sein, dass ein vordefinierter Teil eines Hubes der Membran von einer ersten Endposition der Membran ausgehend möglich ist, wobei die Membran in Bewegungsrichtung nur auf das Getriebe wirkt, wonach ab dem vordefinierten Teil des Hubes der Membran die Membran bzw. ein starr mit der Membran verbundenes Bauelement, welches etwa mittig an der Membran angreift, an einem starr mit dem Ventilschließglied verbundenen Bauelement, insbesondere einer Ventilstange, anliegt, sodass das Getriebe überbrückt ist und eine Bewegung der Membran 1:1 auf das Ventilschließglied übertragen wird.

Üblicherweise sind sowohl die Membran als auch das Ventilschließglied etwa mit einem kreisförmigen Querschnitt ausgebildet und wird eine Bewegung der Membran über ein symmetrisch zu einer Längsachse angeordnetes Bauelement, insbesondere eine Ventilstange, übertragen, welche Längsachse Mittelpunkte von Membran und Ventilschließglied verbindet.

Das Getriebe kann natürlich grundsätzlich auf verschiedenste Weisen ausgebildet sein, insbesondere als Kurbelgetriebe, Kurvengetriebe, Rädergetriebe, Rollengetriebe oder Schraubengetriebe. Ferner kann das Getriebe als beliebiger Mechanismus ausgebildet sein, mit welchem ein Ändern bzw. Umformen von Bewegungsgrößen möglich ist. In einer besonders einfachen Ausführungsform kann das Getriebe auch nur durch einen um eine Drehachse drehbaren Hebel gebildet sein, wobei die Membran, insbesondere ein Bereich der Membran, an welchem die Membran eine maximale Auslenkung aufweist, an einem von der Drehachse entfernten ersten Angriffspunkt auf den Hebel wirkt und eine Bewegung des Hebels an einem zweiten Angriffspunkt auf das Ventilschließglied übertragen wird, wobei der zweite Angriffspunkt einen geringeren Abstand von der Drehachse des Hebels als der erste Angriffspunkt aufweist. Vorzugsweise ist der Hebel dann derart positioniert, dass die Drehachse starr mit dem Ventilgehäuse verbunden ist.

Besonders günstig hat es sich erwiesen, wenn das Getriebe einen Hebel aufweist, welcher zumindest über einen Teilbereich eines möglichen Hubes einerseits mit einer ersten Kontaktposition, welche starr mit dem Ventilsitz verbunden ist, und andererseits mit einer zweiten Kontaktposition, welche starr mit der Membran verbunden ist, verbunden ist, wobei eine Druckplatte vorgesehen ist, welche an einer dritten Kontaktposition mit dem Hebel und, üblicherweise in einer Öffnungsrichtung starr, mit dem Ventilschließglied verbunden ist, sodass die Druckplatte eine Bewegung des Hebels an der dritten Kontaktposition an das Ventilschließglied überträgt. Das Übersetzungsverhältnis kann dann konstruktiv auf besonders einfache Weise durch ein Verhältnis eines zweiten Abstandes zwischen der ersten Kontaktposition und der dritten Kontaktposition zu einem ersten Abstand zwischen der ersten Kontaktposition und der zweiten Kontaktposition vordefiniert werden. Als Öffnungsrichtung wird hierbei eine Richtung verstanden, entlang welcher das Ventilschließglied vom Ventilsitz weg bewegt wird, um die Ventilöffnung freizugeben und den Einlass fluidisch mit dem Auslass zu verbinden.

Hebel und Druckplatte können miteinander sowie mit weiteren Teilen der Ventilvorrichtung insbesondere an den Kontaktpositionen derart bewegbar verbunden sein, dass diese bei einer Öffnungs- oder Schließbewegung der Ventilvorrichtung eine Relativbewegung zueinander an Kontaktflächen ausführen bzw. aneinander gleiten. Um dabei Reibungsverluste zu minimieren, kann vorgesehen sein, dass der oder die Hebel und/oder die Druckplatte mit einer geeigneten Beschichtung versehen sind und/oder aus einem geeigneten Material bestehen, sodass sich an Kontaktflächen reibungsarme Werkstoffpaarungen ergeben.

Es hat sich bewährt, dass ein erster Abstand zwischen der ersten Kontaktposition und der zweiten Kontaktposition größer als ein zweiter Abstand zwischen der ersten Kontaktposition und der dritten Kontaktposition ist, sodass eine Bewegung der Membran entsprechend einem Verhältnis von zweitem Abstand zu erstem Abstand auf das Ventilschließglied übertragbar ist. Üblicherweise beträgt ein Verhältnis von zweitem Abstand zu erstem Abstand etwa 0,1 bis 0,9, vorzugsweise 0,2 bis 0,4, insbesondere etwa 0,25. Der Hebel ist mit den Kontaktpositionen üblicherweise in Öffnungsrichtung formschlüssig verbunden, sodass eine Kraft von der Membran in Öffnungsrichtung auf das Ventilschließglied übertragbar ist. Beispielsweise kann der Hebel an den Kontaktpositionen einfach anliegen, sodass eine entsprechende Kraft übertragbar ist.

Günstig ist es, wenn zwei oder mehr Hebel vorgesehen sind, welche etwa symmetrisch zu einer Mittelachse der Membran angeordnet sind. Eine Mittelachse der Membran entspricht üblicherweise auch einer Mittelachse des in der Regel kreisrund ausgebildeten Ventilschließgliedes. Um eine besonders einfache Herstellbarkeit zu gewährleisten, ist bevorzugt vorgesehen, dass auch bei mehreren Hebeln eine einzige Druckplatte derart angeordnet ist, dass eine Bewegung der Hebel an jeweiligen dritten Kontaktpositionen an der Druckplatte über die Druckplatte auf das Ventilschließglied bzw. die Ventilstange, mit welcher das Ventilschließglied üblicherweise starr verbunden ist, übertragen wird. Die Druckplatte kann auch zusätzlich zur Verbindung mit dem Hebel an der dritten Kontaktposition an weiteren Positionen in Öffnungsrichtung verschiebbar mit dem Hebel verbunden sein, um eine Position des bzw. der Hebel relativ zur Druckplatte zu definieren. Um eine Position der Druckplatte relativ zum Ventilschließglied zu definieren, kann die Druckplatte formschlüssig mit der Ventilstange verbunden sein, welche Ventilstange mit dem Ventilschließglied verbunden ist.

Um unterschiedliche Übersetzungen über einen Hub des Ventilschließgliedes auf einfache Weise zu erreichen, ist es günstig, wenn die Membran ab einem vordefinierten Hub an einem starr mit dem Ventilschließglied verbundenen Bauteil, insbesondere einer Ventilstange, anliegt, sodass ab diesem vorbestimmten Hub eine Bewegung der Membran direkt auf das Ventilschließglied übertragbar ist. Es kann somit ein einfaches Getriebe, welches beispielsweise durch einen Hebel gebildet sein kann, mit konstanter Übersetzung verwendet werden, welches ab dem vorbestimmten Hub durch ein Anliegen der Membran an dem starr mit dem Ventilschließglied verbundenen Bauteil überbrückt wird, sodass über den Hub unterschiedliche Übersetzungen gewährleistet sind, nämlich einerseits bis zum Anliegen der Membran an der Ventilstange bzw. einer formschlüssigen Verbindung der Membran mit der Ventilstange in Öffnungsrichtung eine durch das Getriebe definierte Übersetzung und andererseits ab dem Anliegen der Membran an dem mit dem Ventilschließglied starr verbundenen Bauteil eine Übersetzung von 1:1. Es kann auch vorgesehen sein, dass ab dem vorbestimmten Hub, ab dem ein Übersetzungsverhältnis 1:1 beträgt, der Hebel von der ersten Kontaktposition gelöst wird, um ungünstige mechanische Belastungen des Hebels zu vermeiden.

Alternativ kann über eine geeignete Ausformung der Hebelarme eine mehrstufige Übersetzung realisiert werden, die ein entsprechendes Übersetzungsverhältnis über den gesamten Ventilhub realisiert.

Günstig ist es, wenn das Ventilschließglied ein Rückschlagventil aufweist, sodass bei geöffnetem Ventil ein Überdruck im Auslass ein Verschließen der Öffnung durch das Rückschlagventil bewirkt. Dadurch ist sichergestellt, dass bei einem plötzlich im Abgastrakt auftretenden Überdruck kein Abgas über die Ventilvorrichtung in die Sekundärluftleitung entweichen kann.

Das Ventilschließglied kann einen starr mit der Ventilstange verbundenen Bauteil und/oder einen über eine Rückstellfeder mit der Ventilstange verbundenen Bauteil aufweisen. Diese Bauteile sind üblicherweise strömungsmechanisch in Serie geschaltet und jeweils zum Verschließen der Ventilöffnung gegenüber dem Auslass geeignet, sodass die Ventilvorrichtung nur dann geöffnet ist, wenn ein Strömungspfad vom Einlass zum Auslass durch beide Bauteile freigegeben ist. Wenn das Ventilschließglied sowohl einen starr mit der Ventilstange verbundenen Bauteil als auch einen über eine Rückstellfeder mit der Ventilstange verbundenen Bauteil aufweist, entspricht ein Hub des Ventilschließgliedes einem Hub des starr mit der Ventilstange verbundenen Bauteiles. Ein Hub des über die Rückstellfeder mit der Ventilstange verbundenen Bauteiles bzw. ein Abstand dieses Bauteiles vom Ventilsitz kann somit vom Hub des Ventilschließgliedes abweichen, sodass die Ventilvorrichtung durch das über die Rückstellfeder mit der Ventilstange verbundene Bauteil auch dann geschlossen sein kann, wenn sich der starr mit der Ventilstange verbundene Bauteil in einer vom Ventilsitz beabstandeten Position befindet. Das über die Rückstellfeder mit der Ventilstange verbundene Bauteil kann somit das Rückschlagventil bilden.

Üblicherweise weist das Ventilschließglied hierzu eine starr mit der Ventilstange verbundene Ventilglocke und eine in der Ventilglocke angeordnete und über eine Rückstellfeder mit der Ventilglocke, und somit über die Rückstellfeder und die Ventilglocke auch mit der Ventilstange, verbundene Ventilplatte auf. Ventilglocke und Ventilplatte sind unabhängig voneinander jeweils zum Verschließen der Ventilöffnung bzw. zum Verschließen desselben Strömungspfades vom Einlass zum Auslass geeignet, sodass die Rückstellfeder und die Ventilplatte das Rückschlagventil des Ventilschließgliedes bilden. Das Ventilschließglied kann dann an der Ventilglocke starr mit der Ventilstange verbunden sein, sodass eine Bewegung der Ventilstange 1:1 in eine Bewegung der Ventilglocke übertragen wird und ein Hub des Ventilschließgliedes einem Hub der Ventilglocke entspricht. Herrscht im Einlass ein Überdruck gegenüber dem Auslass, wird eine Öffnungsbewegung der Ventilstange auch 1:1 auf die Ventilplatte übertragen. Herrscht jedoch im Auslass ein Überdruck gegenüber dem Einlass, bewirkt eine Bewegung der Ventilstange in Öffnungsrichtung lediglich einen entsprechenden Hub der Ventilglocke, jedoch kein Öffnen der Ventilplatte, welche über die Rückstellfeder üblicherweise parallel zur Öffnungsrichtung bewegbar mit der Ventilglocke verbunden ist. Die Ventilplatte wird dann durch den Überdruck des Auslasses gegenüber dem Einlass in Verbindung mit der Rückstellfeder in einer geschlossenen Position gehalten, in welcher die Ventilplatte die Ventilöffnung verschließt. Dadurch ist Abgasströmung über die Ventilvorrichtung in die Sekundärluftleitung auf einfache Weise vermieden.

Gegenstand der Erfindung ist es, dass der erste Steuerraum über ein elektrisches Schaltventil mit dem Einlass verbunden ist, sodass der erste Steuerraum bei Einsatz der Ventilvorrichtung in einem Kraftfahrzeug über das elektrische Schaltventil mit einer Sekundärluftleitung verbindbar ist. In der Sekundärluftleitung herrscht üblicherweise ein Überdruck, welcher gegebenenfalls durch eine Sekundärluftpumpe bereitgestellt werden kann, sodass durch ein Betätigen des Schaltventils ein Überdruck im ersten Steuerraum gegenüber dem zweiten Steuerraum erzeugbar ist, um mit einem Betätigen des elektrischen Schaltventils die Ventilvorrichtung zu schalten. So wird bei einem Beaufschlagen des ersten Steuerraumes mit einem Druck des Einlasses das Ventil geöffnet und bei einem Schließen des elektrischen Schaltventils und Ausgleich des Drucks im ersten Steuerraum und zweiten Steuerraum das Ventil durch eine Einrichtung geschlossen, mit welcher eine Kraft auf das Ventilschließglied zum Ventilsitz hin aufbringbar ist, üblicherweise einer als Schraubenfeder ausgebildeten Einrichtung.

Insbesondere ist erfindungsgemäß vorgesehen, dass der erste Steuerraum über eine Entlüftungsleitung mit einer Umgebung verbunden ist, wenn das elektrische Schaltventil geschlossen ist, sodass der erste Steuerraum nicht mit dem Einlass verbunden ist. Vorzugsweise ist das elektrische Schaltventil derart ausgebildet, dass die Verbindung zwischen dem ersten Steuerraum und der Entlüftungsleitung unterbrochen wird, wenn das elektrische Schaltventil geöffnet und der erste Steuerraum mit dem Einlass verbunden ist, sodass der Einlass bei jeder Endstellung des elektrischen Schaltventils fluidisch von einer Umgebung getrennt ist.

Um die Ventilvorrichtung ohne zusätzliche Maßnahmen auf einfache Weise in einem Abgastrakt eines Kraftfahrzeuges einsetzen zu können, ist es günstig, wenn die Ventilvorrichtung bei einem Überdruck im ersten Steuerraum von zumindest 0,3 bar, insbesondere 0,5 bar, gegenüber dem zweiten Steuerraum öffenbar ist. Üblicherweise weisen Sekundärluftleitungen in Kraftfahrzeugen einen entsprechenden Überdruck auf, sodass die Ventilvorrichtung dann auf einfache Weise in einem Kraftfahrzeug eingesetzt werden kann. Es versteht sich, dass hierzu eine Einrichtung zum Schließen der Ventilvorrichtung, insbesondere eine Feder, die Membran sowie das Getriebe entsprechend aufeinander abzustimmen sind.

Um bei einem Kraftfahrzeug eine effektive Abgasreinigung gewährleisten zu können, ist es günstig, wenn bei einem Kraftfahrzeug mit einem Sekundärluftventil, mit welchem Sekundärluft in einen einer Verbrennungskraftmaschine nachgeschalteten Abgastrakt einbringbar ist, das Sekundärluftventil als erfindungsgemäße Ventilvorrichtung ausgebildet ist. So kann dann ein zuverlässiges Öffnen und Schließen des Sekundärluftventils gewährleistet und gleichzeitig ein geringer Bauraum erreicht werden.

Weitere Merkmale, Vorteile und Wirkungen ergeben sich anhand der nachfolgend dargestellten Ausführungsbeispiele. In den Zeichnungen, auf welche dabei Bezug genommen wird, zeigen:
Fig. 1 eine erfindungsgemäße Ventilvorrichtung in einer geschlossenen Arbeitsposition;
Fig. 2 eine erfindungsgemäße Ventilvorrichtung in einer Losbrechposition;
Fig. 3 eine erfindungsgemäße Ventilvorrichtung in einer geöffneten Arbeitsposition;
Fig. 4 eine erfindungsgemäße Ventilvorrichtung in isometrischer Schnittdarstellung;
Fig. 5 eine erfindungsgemäße Ventilvorrichtung in Explosionsdarstellung.

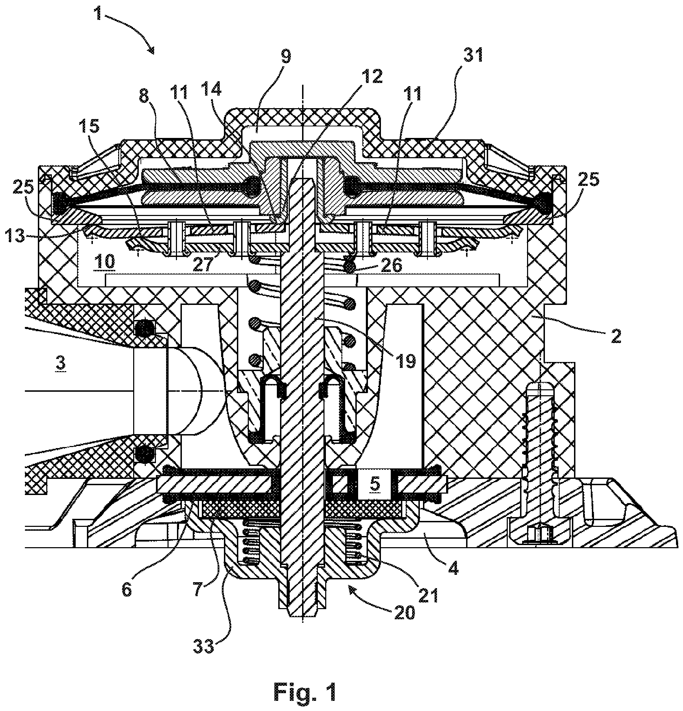

Fig. 1 bis 3 zeigen die Ventilvorrichtung 1 in einer Schnittdarstellung. Wie ersichtlich weist die Ventilvorrichtung 1 ein Ventilgehäuse 2 mit einem Membranklemmdeckel 31, einen üblicherweise mit einer Sekundärluftleitung verbindbaren Einlass 3 und einen mit einem Abgastrakt eines Kraftfahrzeuges verbindbaren Auslass 4 auf, wobei eine fluidische Verbindung zwischen Einlass 3 und Auslass 4 über einen eine Ventilöffnung 5 aufweisenden Ventilsitz 6 möglich ist. Die Ventilöffnung 5 ist durch ein Ventilschließglied verschließbar, welches eine Ventilglocke 33 und eine in der Ventilglocke 33 angeordnete Ventilplatte 7 aufweist, indem die Ventilglocke 33 und/oder die Ventilplatte 7 auf den Ventilsitz 6, welcher in der Regel aus einem Elastomer besteht, gepresst werden.

Das hier aus der Ventilglocke 33, der Ventilplatte 7 und einer die Ventilglocke 33 und die Ventilplatte 7 verbindenden Rückstellfeder 21 bestehende Ventilschließglied ist an der Ventilglocke 33 starr mit der Ventilstange 19 verbunden. Ein Überdruck im Auslass 4 gegenüber dem Einlass 3 bewirkt somit bei geöffneter Ventilplatte 7 und geöffneter Ventilglocke 33 ein Schließen der Ventilplatte 7 und somit eine Bewegung der Ventilplatte 7 relativ zur Ventilglocke 33 entgegen der Öffnungsrichtung 24. Mit der Rückstellfeder 21 und der Ventilplatte 7 wird somit ein Rückschlagventil 20 im Ventilschließglied gebildet, sodass sichergestellt ist, dass die geöffnete Ventilplatte 7 geschlossen wird, wenn im Auslass 4 ein Überdruck gegenüber dem Einlass 3 herrscht, um ein Ausströmen von Abgas in den Einlass 3 zu verhindern. Das durch Ventilplatte 7 und Rückstellfeder 21 gebildete Rückschlagventil 20 wirkt somit parallel zur Ventilglocke 33, sodass die Ventilvorrichtung 1 nur dann geöffnet ist, wenn sowohl das Rückschlagventil 20 als auch die Ventilglocke 33 geöffnet sind.

Die Ventilstange 19 ist mit einer normalerweise aus einem Elastomer bestehenden Membran 8 über ein Druckstück 12, welches auf zwei Hebel 11 wirkt, und eine Druckplatte 27, welche mit jedem Hebel 11 an einer dritten Kontaktposition 15 verbunden ist, verbunden. In der in Fig. 1 dargestellten geschlossenen Position, in welcher die Ventilplatte 7 und die Ventilglocke 33 am Ventilsitz 6 dicht anliegen, sind die Hebel 11 nur an der dritten Kontaktposition 15 mit der Druckplatte 27 verbunden, jedoch sind die Hebel 11 in einem endseitigen Bereich, welcher mit der Membran 8 über das Druckstück 12 verbunden ist, von der Druckplatte 27 beabstandet. Eine Bewegung der Membran 8 kann somit nicht 1:1 auf die Ventilstange 19 übertragen werden, sondern bewirkt bloß eine Bewegung der Hebel 11.

So ist die Membran 8 in der in Fig. 1 dargestellten Position in Öffnungsrichtung 24 kinematisch lediglich indirekt, nämlich über die Hebel 11 und eine Druckplatte 27, mit der Ventilstange 19 verbunden. Auf die Membran 8, welche im Ventilgehäuse 2 an einem Umfang durch den Membranklemmdeckel 31 einerseits und ein Gegenlager 25 andererseits geklemmt ist, wirkt zum einen ein Druck eines ersten Steuerraumes 9 und zum anderen ein Druck eines zweiten Steuerraumes 10, sodass ein Druckunterschied zwischen erstem Steuerraum 9 und zweitem Steuerraum 10 eine resultierende Kraft auf die Membran 8 bewirkt, welche in einem mittigen Bereich in Öffnungsrichtung 24 bewegbar im Gehäuse angeordnet ist, sodass dieser mittige Bereich ausgelenkt wird.

Ausgehend von einer geschlossenen Position der Ventilvorrichtung 1 gemäß Fig. 1 führt somit eine Bewegung der Membran 8 in Öffnungsrichtung 24 der Ventilplatte 7 bzw. in der in Fig. 1 dargestellten Anordnung nach unten zu einer Bewegung der Ventilstange 19, welche gegenüber der Bewegung der Membran 8 durch ein durch die Hebel 11 und die Druckplatte 27 gebildetes Getriebe übersetzt ist, wobei ein Übersetzungsverhältnis bei der dargestellten Anordnung weniger als 1:1 beträgt. Als Übersetzungsverhältnis ist hierbei ein Verhältnis eines Weges der Membran 8 zu einem resultierenden Weg der Ventilstange 19 definiert, und zwar etwa an einer Mittelachse 18, welche Mittelpunkte der etwa kreisförmigen Membran 8 und der etwa kreisförmigen Ventilplatte 7 schneidet, bzw. einem Bereich, in welchem die Membran 8 bei Druckbeaufschlagung eine maximale Auslenkung aufweist. Die Mittelachse 18 ist üblicherweise parallel zur Öffnungsrichtung 24.

Ein Kraftübersetzungsverhältnis, also ein Verhältnis eines Betrages von einer durch die Membran 8 auf das Getriebe eingangsseitig aufgebrachten Kraft zu dem Betrag der vom Getriebe an die Ventilstange 19 ausgangsseitig abgegebenen Kraft ist entsprechend größer als 1:1, üblicherweise etwa 1,5 bis 10, vorzugsweise 3 bis 6.

Das Übersetzungsverhältnis wird erreicht, indem die Hebel 11 in dieser Position einerseits an einer ersten Kontaktposition 13 an einem feststehenden Gegenlager 25 anliegen, welches starr mit dem Ventilsitz 6 und dem Ventilgehäuse 2 verbunden ist. Andererseits sind die Hebel 11 jeweils an einer zweiten Kontaktposition 14 gelagert, welche über das Druckstück 12 im Wesentlichen starr mit einem Teil der Membran 8 verbunden ist, welche bei Druckbeaufschlagung maximal ausgelenkt wird.

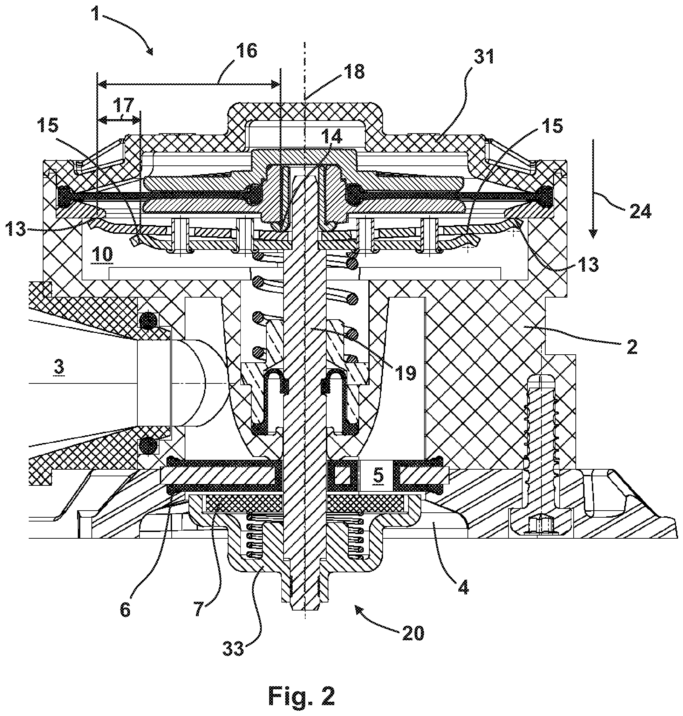

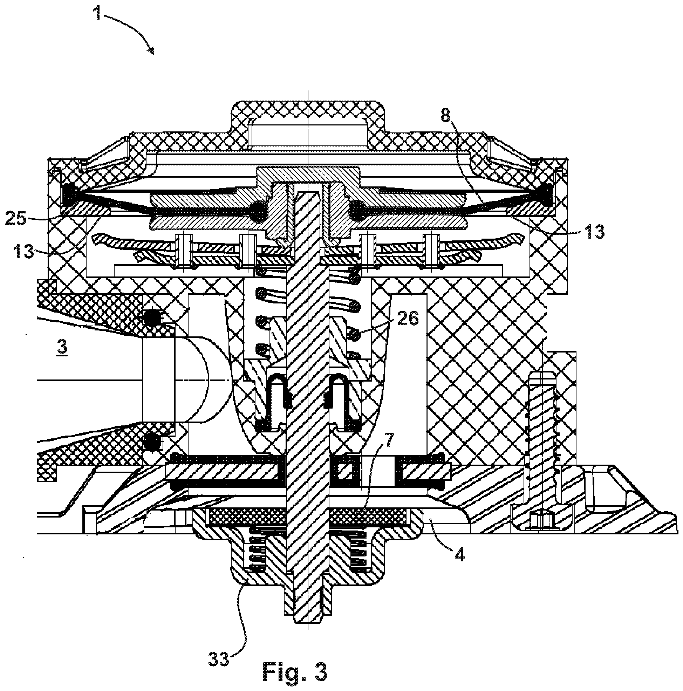

Die in Öffnungsrichtung 24 starr mit der Ventilstange 19 verbundene und üblicherweise aus einem Metall, insbesondere Stahl, bestehende, Druckplatte 27 ist in der in Fig. 1 dargestellten geschlossenen Position der Ventilvorrichtung 1 kinematisch in Öffnungsrichtung 24 mit den Hebeln 11 jeweils an einer dritten Kontaktposition 15 verbunden, wobei wie auch in Fig. 2 und 3 ersichtlich jeweils ein erster Abstand 16 zwischen der ersten Kontaktposition 13 und der zweiten Kontaktposition 14 größer als ein zweiter Abstand 17 zwischen der ersten Kontaktposition 13 und der dritten Kontaktposition 15 ist, sodass eine Bewegung der Membran 8 mit einem einem Verhältnis von zweitem Abstand 17 zu erstem Abstand 16 entsprechenden Übersetzungsverhältnis, welches kleiner als 1:1 ist, auf eine Bewegung der Druckplatte 27 und somit eine Bewegung der Ventilstange 19 übersetzt wird.

Nachdem die Übersetzung kleiner als 1:1 ist, ist eine Geschwindigkeit der Druckplatte 27 bei einer Bewegung aus der in Fig. 1 dargestellten Position geringer als eine Geschwindigkeit der Membran 8, jedoch ist eine Kraft der Ventilstange 19 in Öffnungsrichtung 24 größer als eine von der Membran 8 an der zweiten Kontaktposition 14 auf die Hebel 11 aufgebrachte Kraft in Öffnungsrichtung 24. Dies ermöglicht ein zuverlässiges Öffnen der Ventilglocke 33 auch bei einem Anhaften desselben am Ventilsitz 6, insbesondere aufgrund von Verunreinigungen in einem Bereich, in welchem die Ventilglocke 33 am Ventilsitz 6 anliegt.

Wie weiter ersichtlich ist eine Feder 26 vorgesehen, mit welcher die Membran 8 samt der Druckplatte 27 und der Ventilstange 19 sowie dem Ventilschließglied in eine geschlossene Position gedrückt wird, in welcher die Ventilplatte 7 und die Ventilglocke 33 auf den Ventilsitz 6 gepresst werden, um die Ventilvorrichtung 1 zu verschließen bzw. den Einlass 3 fluidisch vom Auslass 4 zu trennen, wenn kein Druckunterschied zwischen erstem Steuerraum 9 und zweitem Steuerraum 10 gegeben ist. Es versteht sich, dass der erste Steuerraum 9 vom dem zweiten Steuerraum 10 fluidisch getrennt ist, und zwar durch die Membran 8. Ferner ist auch der zweite Steuerraum 10 gegenüber dem Einlass 3 und dem Auslass 4 fluidisch getrennt. Ein fluidisches Verbinden des ersten Steuerraumes 9 mit dem einen Überdruck gegenüber dem Auslass 4 aufweisenden Einlass 3 bewirkt somit einen Überdruck im ersten Steuerraum 9 gegenüber dem zweiten Steuerraum 10, wenn im zweiten Steuerraum 10 ein geringerer Druck als im Einlass 3 vorherrscht.

Nach Beaufschlagen des ersten Steuerraumes 9 mit einem entsprechenden Überdruck, mit welchem unter Wirkung des Getriebes eine Schließkraft der Feder 26 überwunden wird, erreicht die Ventilvorrichtung 1 zunächst den in Fig. 2 dargestellten Zustand. Dieser Zustand kann auch als Losbrechposition bezeichnet werden, weil hier die Ventilplatte 7 und die Ventilglocke 33 bereits vom Ventilsitz 6 gelöst sind und die Membran 8 samt den an dieser an der zweiten Kontaktposition 14 anliegenden Hebeln 11 einen noch in der in Fig. 1 dargestellten Position vorhandenen Freiraum überwunden haben, sodass die Hebel 11 auch endseitig im Bereich der Ventilstange 19 an der Druckplatte 27 anliegen. Die Membran 8 ist somit in einem mittleren Bereich über das Druckstück 12, die Hebel 11 und die Druckplatte 27 in Öffnungsrichtung 24 formschlüssig mit der Ventilstange 19 verbunden. Jede weitere Bewegung der Membran 8 wird somit sowohl in Bezug auf Wege und Geschwindigkeiten als auch in Bezug auf Kräfte 1:1 auf die Ventilstange 19 übertragen bzw. übersetzt. Eine Bewegung der Membran 8 im mittleren Bereich wird somit ab diesem vordefinierten Hub 1:1 auf das Ventilschließglied, und somit 1:1 auf die Ventilglocke 33 sowie, sofern die Rückstellfeder 21 nicht bewegt wird, auch 1:1 auf die Ventilplatte 7 übertragen. Der Hub bis zur Losbrechposition, ab dem das Getriebe auf diese Weise überbrückt ist und ein Übersetzungsverhältnis 1:1 beträgt, ist durch das Übersetzungsverhältnis und den Abstand zwischen einem innenseitigen Ende der Hebel 11 und der Druckplatte 27 in der in Fig. 1 dargestellten geöffneten Position definiert.

Dadurch wird bis zur Losbrechposition durch das Getriebe eine Übersetzung von weniger als 1:1 und ab der Losbrechposition eine Übersetzung von 1:1 erreicht, um das Ventil einerseits mit großer Kraft öffnen und anschließend mit hoher Geschwindigkeit bis zu einem vollständigen Hub der des Ventilschließgliedes bzw. der Ventilglocke 33 öffnen zu können.

In Fig. 3 ist ein geöffneter Zustand der Ventilvorrichtung 1 dargestellt, in welcher sich das Ventilschließglied einschließlich der Ventilplatte 7 und der Ventilglocke 33 an einer Position maximalen Hubes befinden. Wie ersichtlich haben sich in diesem Betriebszustand die Hebel 11 von den ersten Kontaktpositionen 13 am feststehenden Gegenlager 25 gelöst, um unzulässig hohe Belastungen der Hebel 11 zu vermeiden, und ist die Ventilplatte 7 vom Ventilsitz 6 entfernt, sodass Sekundärluft über den Einlass 3 durch die Ventilöffnung 5 in den Auslass 4 strömen kann.

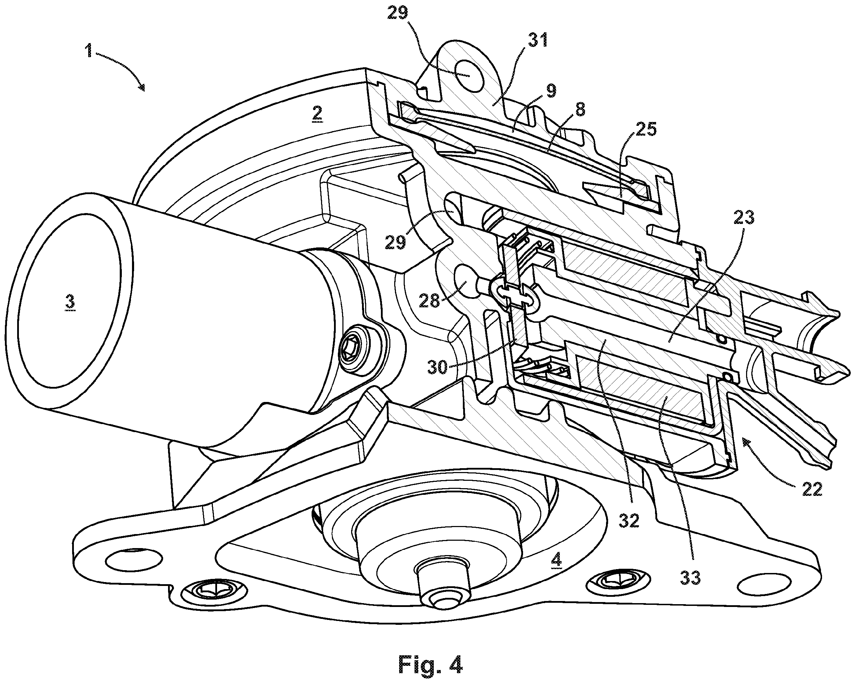

Fig. 4 zeigt die erfindungsgemäße Ventilvorrichtung 1 in isometrischer Schnittdarstellung, wobei eine Schnittebene hier die Mittelachse 18 im Unterschied zu den Fig. 1 bis 3 nicht schneidet, sondern parallel zur Mittelachse 18 verläuft. Dadurch ist ein elektrisches Schaltventil 22 ersichtlich, mit welchem der erste Steuerraum 9 durch Beaufschlagen einer Wicklung mit einem elektrischen Strom und eine dadurch hervorgerufene Bewegung einer Ankerscheibe 30 mit dem Einlass 3 verbindbar ist, um ein gezieltes Schalten des Ventils zu bewirken. Eine Druckabnahmebohrung 28 ist dabei direkt mit dem Einlass 3 verbunden, sodass bei einem Öffnen des Schaltventils 22 durch eine Bewegung der Ankerscheibe 30 zu einem Polkern 32 ein Fluid, insbesondere eine Sekundärluft, von der Druckabnahmebohrung 28 zur Steuerraumbohrung 29 gelangen kann. Die Steuerraumbohrung 29 wiederum ist mit dem ersten Steuerraum 9 verbunden, üblicherweise durch einen Membranklemmdeckel 31.

Bei einem Schließen des Schaltventils 22 wird die in der Regel aus einem Metall, insbesondere Stahl, bestehende Ankerscheibe 30 bewegt, sodass die Druckabnahmebohrung 28 verschlossen und gleichzeitig eine Entlüftungsöffnung 23 freigegeben werden. Dadurch ist der erste Steuerraum 9 über die sich auch in den Membranklemmdeckel 31 erstreckende Steuerraumbohrung 29 fluidisch mit der Entlüftungsöffnung 23 verbunden. Auf diese Weise kann der erste Steuerraum 9 entlüftet werden, sodass die Ventilvorrichtung 1 bei Schließen des Schaltventils 22 durch die Feder 26 wieder geschlossen wird.

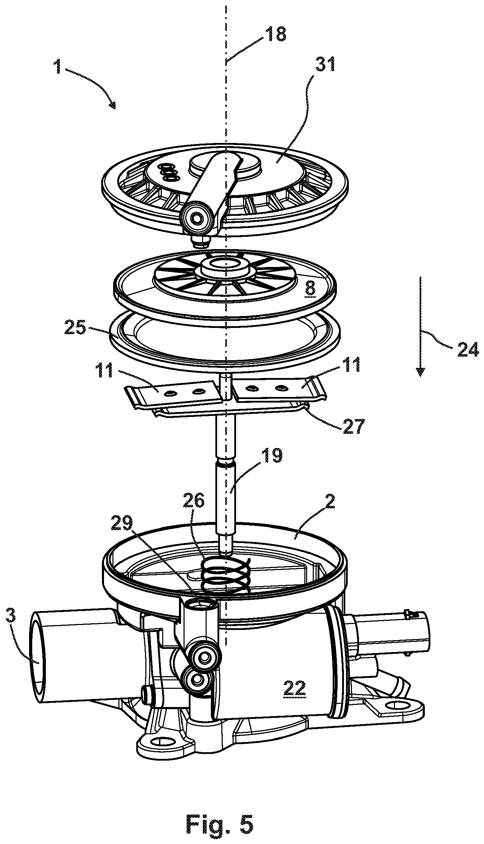

Fig. 5 zeigt eine erfindungsgemäße Ventilvorrichtung 1 in Explosionsdarstellung. Wie hier ersichtlich ist die Membran 8 etwa kreisrund ausgebildet und sind die üblicherweise aus einem Metall bestehenden Hebel 11 durch Plättchen gebildet, welche symmetrisch zur Ventilstange 19 angeordnet sind. Die in der Regel ebenfalls aus einem Metall bestehende Druckplatte 27 ist mit den Hebeln 11 zusätzlich formschlüssig in einer Ebene senkrecht zur Öffnungsrichtung 24 verbunden, um eine Position der Hebel 11 im zweiten Steuerraum 10 relativ zur Mittelachse 18 zu definieren. Weiter ist die Druckplatte 27 über eine mittige Bohrung mit der Ventilstange 19 verbunden, sodass die Druckplatte 27 mit der Ventilstange 19 formschlüssig verbunden und eine Position der Druckplatte 27 relativ zur Ventilstange 19 bzw. zur Mittelachse 18 ebenfalls eindeutig definiert ist.

Eine erfindungsgemäße Ventilvorrichtung 1 ermöglicht ein zuverlässiges Schalten auch bei Einsatz derselben als Sekundärluftventil in einem Kraftfahrzeug, wobei gleichzeitig ein geringer Bauraum gewährleistet ist. Ferner ist die Vorrichtung sehr robust und für Einsatzbedingungen in einem Kraftfahrzeug bei gleichzeitig einfachem und kostengünstigem Aufbau geeignet.

## Patentansprüche

1. Ventilvorrichtung (1), insbesondere Sekundärluftventil für einen Abgasstrang einer Verbrennungskraftmaschine, aufweisend ein Ventilgehäuse (2) mit einem Einlass (3) und einem Auslass (4), einem zwischen dem Einlass (3) und dem Auslass (4) angeordneten, eine Ventilöffnung (5) aufweisenden Ventilsitz (6), welche Ventilöffnung (5) durch ein mittels einer vorbestimmten Kraft gegen den Ventilsitz (6) gedrücktes Ventilschließglied verschließbar ist, sowie eine auf das Ventilschließglied wirkende Membran (8), wobei durch die Membran (8) ein erster Steuerraum (9) von einem zweiten Steuerraum (10) getrennt ist, sodass das Ventil mittels eines Druckunterschiedes zwischen dem ersten Steuerraum (9) und dem zweiten Steuerraum (10) schaltbar ist, wobei die Membran (8) mit dem Ventilschließglied zumindest über einen Teilbereich eines möglichen Hubes des Ventilschließgliedes über ein Getriebe verbunden ist, welches derart ausgebildet ist, dass eine Bewegung der Membran (8) in eine Bewegung des Ventilschließgliedes mit geringerer Geschwindigkeit übersetzt wird, **dadurch gekennzeichnet, dass** der erste Steuerraum (9) über ein elektrisches Schaltventil (22) mit dem Einlass (3) verbunden ist, sodass der erste Steuerraum (9) bei Einsatz der Ventilvorrichtung (1) in einem Kraftfahrzeug über das elektrische Schaltventil (22) mit einer Sekundärluftleitung verbindbar ist, wobei der erste Steuerraum (9) über eine Entlüftungsleitung mit einer Umgebung verbunden ist, wenn das elektrische Schaltventil (22) geschlossen ist, sodass der erste Steuerraum (9) nicht mit dem Einlass (3) verbunden ist.

2. Ventilvorrichtung (1) nach Anspruch 1, **dadurch gekennzeichnet, dass** ein Übersetzungsverhältnis des Getriebes über den Hub des Ventilschließgliedes nicht konstant ist.

3. Ventilvorrichtung (1) nach Anspruch 2, **dadurch gekennzeichnet, dass** das Übersetzungsverhältnis bei geschlossener Ventilvorrichtung (1) kleiner als 1:1 und an einem maximalen Hub größer als bei geschlossener Ventilvorrichtung (1) ist.

4. Ventilvorrichtung (1) nach einem der Ansprüche 1 bis 3, **dadurch gekennzeichnet, dass** die Membran (8) ab einem vordefinierten Hub starr mit dem Ventilschließglied verbunden ist.

5. Ventilvorrichtung (1) nach einem der Ansprüche 1 bis 4, **dadurch gekennzeichnet, dass** das Getriebe einen Hebel (11) aufweist, welcher zumindest über einen Teilbereich eines möglichen Hubes einerseits mit einer ersten Kontaktposition (13), welche starr mit dem Ventilsitz (6) verbunden ist, und andererseits mit einer zweiten Kontaktposition (14), welche starr mit der Membran (8) verbunden ist, verbunden ist, wobei eine Druckplatte (27) vorgesehen ist, welche an einer dritten Kontaktposition (15) mit dem Hebel (11) und, üblicherweise in einer Öffnungsrichtung (24) starr, mit dem Ventilschließglied verbunden ist, sodass die Druckplatte (27) eine Bewegung des Hebels (11) an der dritten Kontaktposition (15) an das Ventilschließglied überträgt.

6. Ventilvorrichtung (1) nach Anspruch 5, **dadurch gekennzeichnet, dass** ein erster Abstand (16) zwischen der ersten Kontaktposition (13) und der zweiten Kontaktposition (14) größer als ein zweiter Abstand (17) zwischen der ersten Kontaktposition (13) und der dritten Kontaktposition (15) ist, sodass eine Bewegung der Membran (8) entsprechend einem Verhältnis von zweitem Abstand (17) zu erstem Abstand (16) auf das Ventilschließglied übertragbar ist.

7. Ventilvorrichtung (1) nach einem Anspruch 5 oder 6, **dadurch gekennzeichnet, dass** zwei oder mehr Hebel (11) vorgesehen sind, welche etwa symmetrisch zu einer Mittelachse (18) der Membran (8) angeordnet sind.

8. Ventilvorrichtung (1) nach einem der Ansprüche 1 bis 7, **dadurch gekennzeichnet, dass** die Membran (8) ab einem vordefinierten Hub an einem starr mit dem Ventilschließglied verbundenen Bauteil, insbesondere einer Ventilstange (19), anliegt, sodass ab diesem vorbestimmten Hub eine Bewegung der Membran (8) direkt auf das Ventilschließglied übertragbar ist.

9. Ventilvorrichtung (1) nach einem der Ansprüche 1 bis 8, **dadurch gekennzeichnet, dass** das Ventilschließglied ein Rückschlagventil (20) aufweist, sodass bei geöffnetem Ventil ein Überdruck im Auslass (4) ein Verschließen der Öffnung durch das Rückschlagventil (20) bewirkt.

10. Ventilvorrichtung (1) nach einem der Ansprüche 1 bis 9, **dadurch gekennzeichnet, dass** die Ventilvorrichtung (1) bei einem Überdruck im ersten Steuerraum (9) von zumindest 0,3 bar, insbesondere 0,5 bar, gegenüber dem zweiten Steuerraum (10) öffenbar ist.

11. Kraftfahrzeug mit einem Sekundärluftventil, mit welchem Sekundärluft in einen einer Verbrennungskraftmaschine nachgeschalteten Abgastrakt einbringbar ist, **dadurch gekennzeichnet, dass** das Sekundärluftventil nach einem der Ansprüche 1 bis 10 ausgebildet ist.

## Claims

1. A valve device (1), particularly a secondary air valve for an exhaust gas section of an internal combustion engine, comprising a valve housing (2) with an inlet (3) and an outlet (4), a valve seat (6) that is arranged between the inlet (3) and the outlet (4) and has a valve opening (5), which valve opening (5) can be closed by means of a valve closing member that is pressed against the valve seat (6) with a predefined force, and a diaphragm (8) that acts upon the valve closing member, wherein a first control chamber (9) is separated from a second control chamber (10) by the diaphragm (8) such that the valve can be switched between the first control chamber (9) and the second control chamber (10) by means of a pressure difference, and wherein the diaphragm (8) is connected to the valve closing member at least over a portion of the potential stroke of the valve closing member by means of a gear mechanism, which is designed in such a way that a movement of the diaphragm (8) is converted into a movement of the valve closing member at a lower speed, **characterized in that** the first control chamber (9) is connected to the inlet (3) via an electric switching valve (22) such that, when the valve device (1) is used in a motor vehicle, the first control chamber (9) can be connected to the secondary air line by means of the electric switching valve (22), wherein the first control chamber (9) is connected to an environment via a ventilation line when the electric switching valve (22) is closed such that the first control chamber (9) is not connected to the inlet (3).

2. The valve device (1) according to claim 1, **characterized in that** a transmission ratio of the gear mechanism is not constant over the stroke of the valve closing member.

3. The valve device (1) according to claim 2, **characterized in that** the transmission ratio is lower than 1:1 when the valve device (1) is closed and greater than when the valve device (1) is closed at a maximum stroke.

4. The valve device (1) according to one of claims 1 to 3, **characterized in that** the diaphragm (8) is rigidly connected to the valve closing member starting at a predefined stroke.

5. The valve device (1) according to one of claims 1 to 4, **characterized in that** the gear mechanism has a lever (11) that at least over a portion of a potential stroke is on the one hand connected to a first contact position (13), which is rigidly connected to the valve seat (6), and on the other hand connected to a second contact position (14), which is rigidly connected to the diaphragm (8), wherein a pressure plate (27) is provided and at a third contact position (15) connected to the lever (11) and, typically rigidly in an opening direction (24), to the valve closing member such that the pressure plate (27) transmits a movement of the lever (11) to the valve closing member at the third contact position (15).

6. The valve device (1) according to claim 5, **characterized in that** a first distance (16) between the first contact position (13) and the second contact position (14) is greater than a second distance (17) between the first contact position (13) and the third contact position (15) such that a movement of the diaphragm (8) can be transmitted to the valve closing member in accordance with a ratio of the second distance (17) to the first distance (16).

7. The valve device (1) according to claim 5 or 6, **characterized in that** two or more levers (11) are provided and arranged approximately symmetrical to a center axis (18) of the diaphragm (8).

8. The valve device (1) according to one of claims 1 to 7, **characterized in that** the diaphragm (8) abuts on a component that is rigidly connected to the valve closing member, particularly a valve rod (19), starting at a predefined stroke such that a movement of the membrane (8) can be directly transmitted to the valve closing member starting at this predefined stroke.

9. The valve device (1) according to one of claims 1 to 8, **characterized in that** the valve closing member has a check valve (20) such that an excess pressure in the outlet (4) causes the opening to be closed by the check valve (20) when the valve is opened.

10. The valve device (1) according to one of claims 1 to 9, **characterized in that** the valve device (1) can be opened when the pressure in the first control chamber (9) exceeds the pressure in the second control chamber (10) by at least 0.3 bar, particularly 0.5 bar.

11. A motor vehicle with a secondary air valve, by means of which secondary air can be introduced into an exhaust gas section arranged downstream of an internal combustion engine, **characterized in that** the secondary air valve is designed in accordance with one of claims 1 to 10.

## Revendications

1. Dispositif de soupape (1), notamment soupape d'air secondaire destinée à une ligne de gaz d'échappement d'un moteur à combustion interne, comportant un corps de soupape (2) pourvu d'une entrée (3) et une sortie (4), un siège de soupape (6), placé entre l'entrée (3) et la sortie (4), comportant une ouverture de soupape (5), laquelle ouverture de soupape (5) pouvant se fermer par un obturateur de soupape, appuyé contre le siège de soupape (6) au moyen d'une force prédéfinie, ainsi qu'une membrane (8) agissant sur l'obturateur de soupape, un premier espace de commande (9) étant séparé d'un deuxième espace de commande (10) par la membrane (8), de telle sorte que la soupape soit commutable au moyen d'une pression différentielle entre le premier espace de commande (9) et le deuxième espace de commande (10), la membrane (8) étant reliée avec l'obturateur de soupape au moins sur une portion partielle d'une course possible entre l'obturateur de soupape par l'intermédiaire d'une transmission, laquelle est conçue de telle sorte qu'un déplacement de la membrane (8) soit transposé avec une vitesse moindre en un déplacement de l'obturateur de soupape, **caractérisé en ce que** le premier espace de commande (9) est relié par une première soupape de commutation (22) électrique avec l'entrée (3), de telle sorte que, lors de l'utilisation du dispositif de soupape (1), le premier espace de commande (9) soit susceptible d'être relié dans un véhicule automobile par l'intermédiaire de la soupape de commutation (22) électrique avec un conduit d'air secondaire, le premier espace de commande (9) étant relié par l'intermédiaire d'un conduit de purge avec un environnement, lorsque la soupape de commutation (22) électrique est fermée, de telle sorte que le premier espace de commande (9) ne soit pas relié avec l'entrée (3).

2. Dispositif de soupape (1) selon la revendication 1, **caractérisé en ce qu'**un rapport de transmission de la transmission via une course de l'obturateur de soupape n'est pas constant.

3. Dispositif de soupape (1) selon la revendication 2, **caractérisé en ce que** lorsque le dispositif de soupape (1) est fermé, le rapport de transmission est inférieur à 1 : 1 et lors d'une course maximale, est supérieur à celui lorsque le dispositif de soupape (1) est fermé.

4. Dispositif de soupape (1) selon l'une quelconque des revendications 1 à 3, **caractérisé en ce qu'**à partir d'une course prédéfinie, la membrane (8) est reliée de manière rigide avec l'obturateur de soupape.

5. Dispositif de soupape (1) selon l'une quelconque des revendications 1 à 4, caractérisé en ce la transmission comporte un levier (11), lequel au moins sur une portion partielle d'une course possible est relié d'une part avec une première position de contact (13), laquelle est reliée de manière rigide avec le siège de soupape (6), et d'autre part avec une deuxième position de contact (14), laquelle est reliée de manière rigide avec la membrane (8), une plaque de pression (27) étant prévue, laquelle sur une troisième position de contact (15) avec le levier (11) est reliée de manière rigide généralement dans une direction d'ouverture (24) avec l'obturateur de soupape, de telle sorte que la plaque de pression (27) transmette à l'obturateur de soupape un déplacement du levier (11) sur la troisième position de contact (15).

6. Dispositif de soupape (1) selon la revendication 5, **caractérisé en ce qu'**un premier écart (16) entre la première position de contact (13) et la deuxième position de contact (14) est supérieur à un deuxième écart (17) entre la première position de contact (13) et la troisième position de contact (15), de sorte qu'un déplacement de la membrane (8) soit transmissible sur l'obturateur de soupape, en fonction d'un rapport du deuxième écart (17) au premier écart (16) .

7. Dispositif de soupape (1) selon l'une quelconque des revendications 5 ou 6, **caractérisé en ce que** deux leviers (11) ou plus sont prévus, lesquels sont placés de manière approximativement symétrique par rapport à un axe médian (18) de la membrane (8).

8. Dispositif de soupape (1) selon l'une quelconque des revendications 1 à 7, **caractérisé en ce qu'**à partir d'une course prédéfinie, la membrane (8) est adjacente à un composant relié de manière rigide avec l'obturateur de soupape, notamment à une tige de soupape (19), de telle sorte qu'à partir de ladite course prédéfinie, un déplacement de la membrane (8) soit directement transmissible sur l'obturateur de soupape.

9. Dispositif de soupape (1) selon l'une quelconque des revendications 1 à 8, **caractérisé en ce que** l'obturateur de soupape comporte une soupape antiretour (20), de telle sorte que lorsque la soupape est ouverte, une surpression dans la sortie (4) provoque une fermeture de l'ouverture par la soupape antiretour (20).

10. Dispositif de soupape (1) selon l'une quelconque des revendications 1 à 9, **caractérisé en ce que** lors d'une surpression d'au moins 0,3 bar, notamment de 0,5 bar dans le premier espace de commande (9), le dispositif de soupape (1) peut s'ouvrir par rapport au deuxième espace de commande (10).

11. Véhicule automobile, pourvu d'une soupape d'air secondaire, à l'aide de laquelle de l'air secondaire est susceptible d'être introduit dans un trajet de gaz d'échappement monté en aval d'un moteur à combustion interne, **caractérisé en ce que** la soupape d'air secondaire est conçue selon l'une quelconque des revendications 1 à 10.
